# EUROPÄISCHE PATENTSCHRIFT

(11) **EP 2 347 106 B1**
(45) Veröffentlichungstag und Bekanntmachung des Hinweises auf die Patenterteilung: **22.04.2015**
(21) Anmeldenummer: 08875029.4
(22) Anmeldetag: 21.11.2008
(51) Int. Cl.: B01F 5/02, B01F 3/04, B01F 5/06, B01D 53/90, F01N 3/20, F01N 3/28

(54) **EINRICHTUNG ZUM MISCHEN UND/ODER VERDAMPFEN EINES REDUKTIONSMITTELS SOWIE EINRICHTUNG ZUR BEAUFSCHLAGUNG EINES ABGASSTROMS MIT EINEM REDUKTIONSMITTEL**
EQUIPMENT FOR MIXING AND/OR EVAPORATING A REDUCING AGENT AND EQUIPMENT FOR APPLYING A REDUCING AGENT TO AN EXHAUST GAS FLOW
DISPOSITIF DE MÉLANGE ET/OU D'ÉVAPORATION D'UN AGENT DE RÉDUCTION ET DISPOSITIF DE MISE EN CONTACT D'UN FLUX DE GAZ D'ÉCHAPPEMENT AVEC UN AGENT DE RÉDUCTION

(43) Veröffentlichungstag der Anmeldung: 27.07.2011
(73) Patentinhaber: Bayerische Motoren Werke Aktiengesellschaft, 80809 München (DE)
(72) Erfinder: SCHÖNBERGER, Klaus, A-4491 Niederneukirchen (AT); TANGEMANN, Rüdiger, A-4523 Neuzeug (AT)
(86) Internationale Anmeldenummer: PCT/EP2008/009905
(87) Internationale Veröffentlichungsnummer: WO 2010/057508

(56) Entgegenhaltungen:
- EP-A- 1 712 751
- EP-A- 1 835 139
- DE-A1-102006 055 036
- DE-B3-102006 058 715

## Beschreibung

Die Erfindung betrifft eine Einrichtung zum Mischen eines Reduktionsmittels mit einem und/oder zum Verdampfen eines Reduktionsmittels in einem Abgasstrom einer Brennkraftmaschine umfassend eine im Abgaskanal angeordnete, gitterartige, abgasdurchströmbare und reduktionsmittelbeaufschlagbare, Struktur mit mehreren Leitelementen sowie eine Einrichtung zur Beaufschlagung eines Abgasstroms mit einem Reduktionsmittel.

Bei der selektiven katalytischen Reduktion oder SCR (Selective Catalytic Reduction) wird zur Verminderung des Stickoxidanteils im Abgas von Brennkraftmaschinen, insbesondere von Kohlenwasserstoffbetriebenen Brennkraftmaschinen, wie diesel- oder benzinbetriebenen Brennkraftmaschinen, aber auch von gasbetriebenen Brennkraftmaschinen, wie wasserstoffbetriebenen Brennkraftmaschinen, eine Harnstoff-Wasser-Lösung in den Abgasstrang zudosiert. Der Harnstoff der eingedüsten Lösung wird im Abgasstrang selbst oder in einem ggf. im Abgasstrang angeordneten Hydrolysekatalysator zu Ammoniak (NH₃) umgesetzt, das die im Abgas enthaltenen Stickoxide (NO_{X}) in einem nachgeschalteten SCR-Katalysator unter Bildung von Stickstoff (N₂) und Wasser (H₂O) reduziert. Da die Stickoxide (NO_{X}) auf diese Weise nahezu vollständig aus dem Abgas entfernt werden können, lassen sich Brennkraftmaschinen mit einem relativ mageren Gemisch betreiben, was einen kraftstoffsparenden Betrieb der Brennkraftmaschinen ermöglicht. An Stelle einer Harnstoff- Wasser-Lösung können ggf. auch andere Ammoniak- oder Reduktionsmittel-Vorläufer zudosiert werden, aus denen unter den Bedingungen im Abgasstrang gasförmiges Ammoniak (NH₃) oder ein anderes zur Reduktion von Stickoxiden geeignetes Reduktionsmittel entsteht.

Um das gewünschte Ziel zu erreichen, ist jedoch eine homogene Verteilung des Reduktionsmittels im Abgas von großer Bedeutung. Wenn das Reduktionsmittel beim Eintritt in den SCR-Katalysator in Form von sogenannten "Stromfäden" ungleichmäßig im Abgas verteilt ist, wird der SCR-Katalysator nicht gleichmäßig mit dem Reduktionsmittel beaufschlagt, sodass es an einigen Stellen zu einem Reduktionsmitteldefizit und an anderen Stellen zu einem Reduktionsmittelüberschuss kommen kann. Dies führt an den zuerst genannten Stellen zu einer unvollständigen Umsetzung der Stickoxide (NO_{X}), während Ammoniak als Reduktionsmittel an den zuletzt genannten Stellen zum Auftreten von Ammoniakschlupf führen kann, das heißt zu einem Hindurchtritt des Ammoniaks durch den SCR-Katalysator und zu einem Austritt durch den Auspuff, was eine Geruchsbelästigung zur Folge hat.

Zur Lösung dieses Problems wird gemäß der DE 10 2005 063 081 A1 vorgeschlagen, in einem Abgaskanal stromab eines Dosiermoduls zum dosierten Einspritzen einer Harnstoff-Wasser-Lösung einen statischen Mischer anzuordnen, der durch Umlenkung und Verwirbelung des Abgasstroms für eine verbesserte Durchmischung des Abgases und des darin enthaltenen Reduktionsmittels sorgt. Außerdem soll der Mischer als Oberflächenverdampfer wirken, dessen Oberfläche gleichzeitig als Prallfläche für den Reduktionsmittel-Vorläufer dient. Der Mischer weist einen symmetrischen Aufbau auf, indem er gitterartig mit zwei Scharen von orthogonalen Gitterstegen und von den Gitterstegen getragene Leitschaufeln ausgestaltet ist, wobei die Leitschaufeln unter demselben Anstellwinkel zur Abgaskanalachse geneigt sind und reihenweise entgegengesetzte Neigungsrichtungen besitzen. Die Leitschaufeln sind im Wesentlichen gleich groß und weisen dieselbe Form auf, der Mischer weist in Abgaskanalachsrichtung über den Abgaskanalquerschnitt einen konstanten Durchtrittsweg auf. Es hat sich jedoch herausgestellt, dass die mit dem bekannten Mischer erreichbaren NOₓ-Umsätze im dynamischen Fahrzeugbetrieb nicht immer ausreichend sind. Außerdem bilden sich an der Abgasanlage im Inneren des Abgaskanals Wandfilme der Harnstoff-Wasser-Lösung durch direktes Auftreffen von Harnstoff-Wasser-Lösungs-Teilstrahlen an die Innenwand des Abgaskanals stromab des Mischers, indem der Mischer bereichsweise "durchspritzt" wird und der bekannte Mischer bedingt im Abgaskanal einen hohen Druckverlust, der zur Reduktion der Brennkraftmaschineleistung führt.

Des Weiteren ist aus der EP 1712751 A1 ein statischer Mischer zum Mischen und/oder Verdampfen eines Reduktionsmittels in einem Abgasstrom einer Brennkraftmaschine mit Streifen bekannt, wobei die Streifen an einer Kante jeweils Leitschaufeln aufweisen. Diese sind gegenüber einer Längsachse gebogen angeordnet, um einen Abgasstrom in Drehbewegung zu versetzen.

Aufgabe der Erfindung ist es daher, eine eingangs genannte Einrichtung bereitzustellen, mit der ein Durchspritzen auch von Teilstrahlen der Harnstoff-Wasser-Lösung wirksam vermieden ist und welche einen minimierten Strömungswiderstand im Abgaskanal darstellt.

Die Lösung der Aufgabe erfolgt mit einer Einrichtung mit den Merkmalen des Anspruchs 1, wobei die im Abgaskanal angeordnete Struktur einen asymmetrischen Aufbau aufweist. Dadurch wird bei Verwendung einer zum Abgaskanal asymmetrisch angeordneten Reduktionsmittelzuführeinrichtung der Tatsache Rechnung getragen, dass die Teilstrahlen der Harnstoff-Wasser-Lösung unter unterschiedlichen Winkeln auftreffen und ein

Durchspritzen auch von Teilstrahlen der Harnstoff-Wasser-Lösung wirksam vermieden, sodass eine gleichmäßige Verteilung der Harnstoff-Wasser-Lösung im Abgaskanal ohne Bildung von Wandfilme an der Innenwand des Abgaskanals stromab der Struktur und damit eine vollständige Umsetzung der Stickoxide (NO_{X}) bei gleichzeitiger Vermeidung eines Ammoniakschlupfs gewährleistet ist.

Außerdem wird die Aufgabe mit einer Einrichtung zur Beaufschlagung eines Abgasstroms mit einem Reduktionsmittel, wobei eine zum Abgaskanal asymmetrisch angeordneten Reduktionsmittelzuführeinrichtung und eine asymmetrisch aufgebaute Einrichtung zum Mischen eines Reduktionsmittels mit einem und/oder zum Verdampfen eines Reduktionsmittels in einem Abgasstrom vorgesehen sind.

Besonders zu bevorzugende Ausführungen und Weiterbildungen der Erfindung sind Gegenstand der Unteransprüche.

Vorzugsweise ist die Asymmetrie der Struktur durch unterschiedliche Anstellwinkel der Leitelemente erreicht, was insbesondere eine optimierte Zerstäubung gewährleistet. Alternativ oder zusätzlich wir erfindungsgemäß die Asymmetrie der Struktur insbesondere zur Optimierung der Verdampfung der Harnstoff-Wasser-Lösung durch unterschiedliche Größe der Leitelemente und/oder durch eine unterschiedliche Form der Leitelemente erreicht.

Sehr vorteilhaft ist es, wenn die Leitelemente verstell- und/oder verformbar sind, sodass eine Anpassung an den Massendurchsatz im Abgaskanal erfolgen kann, wobei es sich anbietet, dann die Leitelemente aus einem flexiblen Material wie Federstahl herzustellen oder Gelenkmechanismen vorzusehen.

Bevorzugt ist bei einer erfindungsgemäßen Einrichtung zur Verwendung mit einer zum Abgaskanal asymmetrisch angeordneten Reduktionsmittelzuführeinrichtung der asymmetrische Aufbau der Struktur an der Reduktionsmittelzuführeinrichtung orientiert.

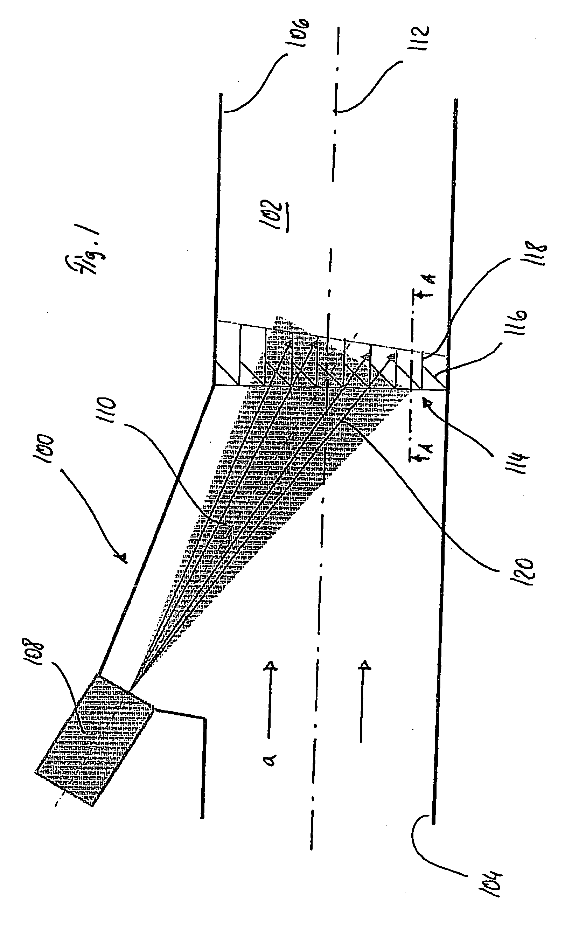

Nachfolgend ist unter Bezugnahme auf Figuren ein besonders zu bevorzugendes Ausführungsbeispiel der Erfindung näher erläutert, dabei zeigen schematisch und beispielhaft
- Figur 1: eine Einrichtung zur Beaufschlagung eines Abgasstroms mit einem Reduktionsmittel mit einer zum Abgaskanal asymmetrisch angeordneten Reduktionsmittelzuführeinrichtung und einem asymmetrisch aufgebauten Mischer/Verdampfer.

Figur 1 zeigt eine Einrichtung 100 zur Beaufschlagung eines Abgasstroms a mit einem Reduktionsmittel 110 mit einem zum Abgaskanal 102 asymmetrisch angeordneten Reduktionsmittel-Injektor 108 und einem asymmetrisch aufgebauten Mischer/Verdampfer 114, ein Schnitt entlang der in Figur 1 mit A-A bezeichneten Linie ist in Figur 2 dargestellt.

Die Einrichtung 100 ist als Einbauteil zur Montage in einem von einem Abgasstrom a einer hier nicht näher gezeigten Brennkraftmaschine eines Kraftfahrzeugs von einem Strömungseingang 104 zu einem Strömungsausgang 106 hin durchströmten Abgaskanal 102ausgeführt und zur Anordnung stromaufwärts eines SCR-Katalysators des Kraftfahrzeugs bestimmt, der zur Reduktion von im Abgas enthaltenen Stickoxiden (NO_{X}) durch Umsetzung mit Ammoniak (NH₃) unter Bildung von Stickstoff (N₂) und Wasser (H₂O) dient.

Der Reduktionsmittel-Injektor 108 ist von außen winklig in Abgasströmungsrichtung gerichtet am Angaskanal 102 angeordnet, mittels einer Leitung mit einem Reduktionsmittel-Tank verbunden und wird unter Einbeziehung von Parametern der Brennkraftmaschine und/oder in einer Steuereinrichtung hinterlegter Parameter mittels einer Steuereinrichtung gesteuert, die baulich gesondert und mit einer Brennkraftmaschinensteuerung verbunden oder Teil einer Brennkraftmaschinensteuerung oder einer sonstigen Steuerung ist.

Mittels des Reduktionsmittel-Injektors 108 ist eine Harnstoff-Wasser-Lösung als Vorläufer für das zur Reduktion der Stickoxide (NO_{X}) im Katalysator benötigte Ammoniak (NH₃) stromaufwärts vom Katalysator gleichförmig dem Abgasstrom a zudosierbar. Der Mischer/Verdampfer 114 dient zur Zerstäubung und Verdampfung der zudosierten Harnstoff-Wasser-Lösung und zu Unterstützung bzw. Beschleunigung deren Umsetzung zu Ammoniak und gleichzeitig zur gleichförmigen Verteilung des erzeugten Ammoniaks im Abgasstrom.

Der Mischer/Verdampfer 114 umfasst ein sich über zumindest annähernd den gesamten Abgaskanalquerschnitt erstreckendes Gitter mit zwei Scharen von orthogonalen Gitterstegen und von den Gitterstegen getragene, sich stromabwärts erstreckende Strömungsleitelemente 116, 118,. Dabei sind alternierend in Abgaskanalachsrichtung gerichtete gerade Strömungsleitelemente 118 sowie gebogene Strömungsleitelemente 116 vorgesehen. Temperaturbedingt wirken die Strömungsleitelemente 116, 118 des Mischers/Verdampfers 114 nicht nur als Zerstäuber und Mischer, sondern auch als Verdampfer.

Die gebogenen Strömungsleitelemente 116 setzen in ihrem dem Gitter zugeordneten Wurzelbereich in Abgaskanalachsrichtung an und ihre stromabwärts gerichteten Enden sind in Richtung der Abgaskanal-Innenwand gebogen. In radialer Richtung sind die Strömungsleitelemente 116 in Richtung des Reduktionsmittel-Injektors 108 gebogen und bilden so einzelne Prallbleche zur Zerstäubung einzelner Harnstoff-Wasser-Lösungs-Teilstrahlen 120 des von dem Reduktionsmittel-Injektor 108 ausgehenden Reduktionsmittel-Sprühkegels 110.

Mittels der geraden Strömungsleitelemente 118 ist ein Durchspritzen einzelner Harnstoff-Wasser-Lösungs-Teilstrahlen 120 zwischen den gebogenen Strömungsleitelementen 116 hindurch verhindert, indem diese in Abgaskanalachsrichtung länger als die gebogenen Strömungsleitelementen 116 ausgeführt sind. Dabei weisen die in radialer Richtung dem Reduktionsmittel-Injektor 108 zugewandten geraden Strömungsleitelemente 118 eine zunehmend größere Länge auf als die in radialer Richtung dem Reduktionsmittel-Injektor 108 abgewandten Strömungsleitelemente 118, sodass nicht nur Harnstoff-Wasser-Lösungs-Teilstrahlen 120, die zwischen den gebogenen Strömungsleitelementen 116 hindurch in einem vergleichsweise spitzen Winkel auf den Mischer/Verdampfer 114 treffen, zerstäubt und verdampft werden, sondern auch Harnstoff-Wasser-Lösungs-Teilstrahlen 120, die zwischen den gebogenen Strömungsleitelementen 116 hindurch in einem vergleichsweise stumpfen Winkel auf den Mischer/Verdampfer 114 treffen. Der Mischer/Verdampfer 114 wird so auch von einzelnen Harnstoff-Wasser-Lösungs-Teilstrahlen 120 nicht durchspritzt, er ist "durchspritzungsdicht."

Insbesondere für den Fall, dass aufgrund dieser optimierten Ausgestaltung des Mischers/Verdampfers 114, 21 eine zu starke Abkühlung erfolgt und dadurch der Verdampfungswirkungsgrad zu stark reduziert wird, kann eine Beheizung Mischers/Verdampfers 114 vorgesehen sein, beispielsweise mittels einer elektrischen Widerstandsheizung.

Insbesondere aufgrund der in Abgaskanalachsrichtung gerichteten geraden Strömungsleitelemente 118 stellt der Mischer/Verdampfer 114 gegenüber bekannten Einrichtungen einen stark verringerten Strömungswiderstand dar, sodass die Leistung der Brennkraftmaschine wenn überhaupt nur unwesentlich verringert ist.

Gegebenenfalls ist der Mischer/Verdampfer 114 zumindest bereichsweise mit einer katalytischen Beschichtung versehen, die bei den im Angasstrang herrschenden Temperaturen eine vollständige Umsetzung von Harnstoff durch Hydrolyse in seine Folgeprodukte sicherstellt.

## Patentansprüche

1. Einrichtung (100) zum Mischen eines Reduktionsmittels mit einem und/oder zum Verdampfen eines Reduktionsmittels in einem Abgasstrom einer Brennkraftmaschine umfassend eine im Abgaskanal (102) angeordnete, gitterartige, gasdurchströmbare und reduktionsmittelbeaufschlagbare Struktur (114) mit mehreren Leitelementen (116,118), **dadurch gekennzeichnet, dass** die Struktur (114) zum Mischen ein sich über zumindest annähernd den gesamten Abgaskanalquerschnitt erstreckendes Gitter mit zwei Scharen von orthogonalen Gitterstegen und von den Gitterstegen getragenen, sich stromabwärts erstreckende Strömungsleitelemente (116,118) umfasst, die alternierend in Abgaskanalachsrichtung gerichtete gerade Strömungsleitelemente (118) sowie gebogene Strömungsleitelemente (116) umfassen.

2. Einrichtung nach Anspruch 1, **dadurch gekennzeichnet, dass** die gebogenen Strömungsleitelemente (116) in ihrem dem Gitter zugeordneten Wurzelbereich in Abgaskanalachsrichtung ansetzen und ihre stromabwärts gerichteten Enden in Richtung einer Abgaskanalinnenwand gebogen sind.

3. Einrichtung nach einem der Ansprüche 1 bis 2, **dadurch gekennzeichnet, dass** die geraden Strömungsleitelemente (118) in Abgaskanalachsrichtung länger ausgeführt sind als die gebogenen Strömungsleitelemente (116).

4. Einrichtung nach einem der Ansprüche 1 bis 3, **dadurch gekennzeichnet, dass** die reduktionsmittelbeaufschlagbare Struktur (114) einen asymmetrischen Aufbau aufweist.

5. Einrichtung (100) nach Anspruch 1, **dadurch gekennzeichnet, dass** die Asymmetrie der Struktur (114) durch unterschiedliche Anstellwinkel der Leitelemente (116,118) und/oder durch unterschiedliche Größe der Leitelemente (116,118) und/oder durch unterschiedliche Form der Leitelemente (116, 118) erreicht ist.

6. Einrichtung (100) nach einem der vorhergehenden Ansprüche, **dadurch gekennzeichnet, dass** die Leitelemente (116, 118) verstell und/oder verformbar sind.

7. Einrichtung (100) nach einem der vorhergehenden Ansprüche zur Verwendung mit einer zum Abgaskanal (102) asymmetrisch angeordneten Reduktionsmittelzuführeinrichtung (108), **dadurch gekennzeichnet, dass** der asymmetrische Aufbau der Struktur (114) an der Reduktionsmittelzuführeinrichtung (108) orientiert ist.

8. Einrichtung nach Anspruch 7, **dadurch gekennzeichnet, dass** die gebogenen Strömungsleitelemente (116) in radialer Richtung in Richtung einer Reduktionsmittelzuführeinrichtung (108) gebogen sind, um einzelne Prallbleche zu bilden.

9. Einrichtung nach einem der Ansprüche 7 bis 8, **dadurch gekennzeichnet, dass** die in radialer Richtung der Reduktionsmittelzuführeinrichtung (108) zugewandten geraden Strömungsleitelemente (118) eine zunehmend größere Länge aufweisen als die in radialer Richtung der Reduktionsmittelzuführeinrichtung (108) abgewandten geraden Strömungsleitelemente (118).

10. Einrichtung zur Beaufschlagung eines Abgasstroms mit einem Reduktionsmittel, **gekennzeichnet durch** eine zum Abgaskanal (102) asymmetrisch angeordnete Reduktionsmittelzuführeinrichtung (108) und eine Einrichtung (100) nach einem der vorhergehenden Ansprüche, wobei die Einrichtung (100) asymmetrisch aufgebaut ist.

## Claims

1. A device (100) for mixing a reducing agent with and/or for evaporating a reducing agent in a stream of exhaust from an internal combustion engine, comprising a grid-like structure (1 14) disposed in the exhaust pipe (102), the structure being flowable through by gas and adapted to receive a reducing agent and comprising a number of flow guides (116, 118), **characterised in that** the structure (114) for mixing comprises a grid extending at least approximately over the entire cross-section of the exhaust pipe with two families of orthogonal crossbars and flow flow guides (116, 118) extending downstream from the crossbars, the straight flow guides (118) extending in the axial direction of the exhaust pipe and alternating with curved flow guides (116).

2. A device according to claim 1, **characterised in that** the curved flow guides (116), in their root region associated with the grid, begin in the axial direction of the exhaust pipe and their downstream ends are curved towards an inner wall of the exhaust pipe.

3. A device according to claim 1 or claim 2, **characterised in that** the straight flow guides (118) are made longer in the axial direction of the exhaust pipe than the curved flow guides (116).

4. A device according to any of claims 1 to 3, **characterised in that** the structure (114) for receiving a reducing agent is made asymmetrical.

5. A device (100) according to claim 1, **characterised in that** the asymmetry of the structure (114) is obtained by varying the adjustment angle of the flow guides (116, 118) and/or by varying the size of the flow guides (116, 118) and/or by varying the shape of the flow guides (116, 118).

6. A device (100) according to any of the preceding claims, **characterised in that** the flow guides (116, 118) are adjustable and/or deformable.

7. A device (100) according to any of the preceding claims for use in a reducing-agent supply device (108) disposed asymmetrically relative to the exhaust pipe (102), **characterised in that** the asymmetrical structure (114) is positioned on the reducing-agent supply device (108).

8. A device according to claim 7, **characterised in that** the curved flow guides (116) are curved in the radial direction towards a reducing-agent supply device (108), in order to form individual baffle plates.

9. A device according to claim 7 or claim 8, **characterised in that** the straight flow guides (118) facing the reducing-agent supply device (108) in the radial direction have an increasingly greater length than the straight flow guides (118) facing away from the reducing-agent supply device (108) in the radial direction.

10. A device for supplying a flow of exhaust gas with a reducing agent, **characterised by** a reducing-agent supply device (108) disposed asymmetrically relative to the exhaust pipe (102) and comprising a device (100) according to any of the preceding claims, wherein the device (100) is made asymmetrical.

## Revendications

1. Dispositif (100) permettant de mélanger un agent réducteur avec un flux de gaz d'échappement d'un moteur et/ou de vaporiser un agent réducteur dans un flux de gaz d'échappement d'un moteur comportant une structure (114) pouvant être traversée par les gaz et être chargée en agent réducteur, en forme de treillis située dans le canal de gaz d'échappement (102) et comportant plusieurs éléments conducteurs (116, 118),
**caractérisé en ce que**
la structure (114) comporte pour permettre le mélange un treillis s'étendant sur au moins approximativement la totalité de la section du canal de gaz d'échappement, avec deux ensembles de traverses de treillis orthogonales, et des éléments de guidage de flux (116, 118) portés par les traverses de treillis, s'étendant vers l'aval, et qui comportent en alternance des éléments de guidage de flux rectilignes (118) dirigés dans la direction de l'axe du canal des gaz d'échappement ainsi que des éléments de guidage de flux (116) recourbés.

2. Dispositif conforme à la revendication 1,
**caractérisé en ce que**
les éléments de guidage de flux recourbés (116) sont positionnés dans la direction de l'axe du canal de gaz d'échappement dans leur zone de talon associée au treillis et leurs extrémités dirigées vers l'aval sont recourbées dans la direction de la paroi interne du canal des gaz d'échappement.

3. Dispositif conforme à l'une des revendications 1 et 2,
**caractérisé en ce que**
les éléments de guidage du flux rectilignes (118) sont plus longs dans la direction de l'axe du canal des gaz d'échappement que les éléments de guidage du flux recourbés (116).

4. Dispositif conforme à l'une des revendications 1 et 3,
**caractérisé en ce que**
la structure (114) pouvant être chargée en agent réducteur présente une configuration asymétrique.

5. Dispositif (100) conforme à la revendication 1,
**caractérisé en ce que**
l'asymétrie de la structure (114) est obtenue par des angles d'incidence différents des éléments de guidage (116, 118), et/ou par des dimensions différentes des éléments de guidage (116, 118) et/ou par une forme différente des éléments de guidage (116, 118).

6. Dispositif (100) conforme à l'une des revendications précédentes,
**caractérisé en ce que**
les éléments de guidage (116, 118) sont réglables et/ou déformables.

7. Dispositif (100) conforme à l'une des revendications précédentes, destiné à être utilisé avec un dispositif d'introduction d'un agent réducteur dans le canal de gaz d'échappement (102) ayant une configuration asymétrique (108),
**caractérisé en ce que**
la configuration asymétrique de la structure (114) est orientée vers le dispositif d'introduction d'agent réducteur (108).

8. Dispositif conforme à la revendication 7,
**caractérisé en ce que**
les éléments de guidage du flux recourbés (116) sont recourbés en direction radiale, dans la direction d'un dispositif d'introduction (108) d'agent réducteur pour former des tôles de chicanes individuelles.

9. Dispositif conforme à l'une des revendications 7 à 8,
**caractérisé en ce que**
les éléments de guidage du flux linéaires (118) tournés dans la direction radiale du dispositif d'introduction d'agent réducteur (108) ont une longueur constamment supérieure à celle des éléments de guidage du flux linéaire rectilignes (118) tournés à l'opposé du dispositif d'introduction d'agent réducteur (108) en direction radiale.

10. Dispositif permettant de charger un flux de gaz d'échappement avec un agent réducteur,
**caractérisé par**
un dispositif d'introduction d'agent réducteur (108) monté de manière asymétrique par rapport au canal de gaz d'échappement (102) et un dispositif (100) conforme à l'une des revendications précédentes, le dispositif (100) ayant une configuration asymétrique.
